# FASCICULE DE BREVET EUROPEEN

(11) **EP 2 590 848 B1**
(45) Date de publication et mention de la délivrance du brevet: **10.06.2015**
(21) Numéro de dépôt: 11743097.5
(22) Date de dépôt: 05.07.2011
(51) Int. Cl.: B62B 3/10, A45C 13/26, A45C 13/30, A45C 3/04

(54) **CHARIOT DE SUPERMARCHE.**
EINKAUFSWAGEN
SUPERMARKET TROLLEY

(30) Priorité: 18.01.2011 FR 1150376; 28.07.2010 FR 1056235; 05.07.2010 FR 1055424
(43) Date de publication de la demande: 15.05.2013
(73) Titulaire: Carrefour, 92100 Boulogne Billancourt (FR)
(72) Inventeur: PICAUD, Philippe, F-92100 Boulogne Billancourt (FR); REBOURS, Christophe, F-92150 Suresnes (FR)
(74) Mandataire: Novagraaf Technologies
(86) Numéro de dépôt international: PCT/FR2011/051598
(87) Numéro de publication internationale: WO 2012/004527

(56) Documents cités:
- EP-A1- 2 590 849
- WO-A1-84/00940
- DE-U1- 29 820 906
- US-A1- 2006 145 437
- US-B1- 7 566 069

## Description

L'invention concerne un ensemble comprenant deux chariots de supermarché identiques.

Dans le domaine, on connaît des chariots (identiques) adaptés pour s'engager les uns dans les autres pour un rangement compact, chacun présentant un avant, un arrière, et un axe longitudinal les intersectant.

Il reste toutefois des difficultés à surmonter concernant la réalisation de chariots pratiques d'emploi et dont l'armature tubulaire serait (de préférence à la fois) solide, adaptée à un interengagement (encastrement) pour un rangement compact, adaptée à supporter des sacs qui y seraient suspendus.

Un objectif est donc de pouvoir charger dans ce(s) sac(s), au fur et à mesure des rayons, les achats faits, puis, en sortie du supermarché, pouvoir laisser chaque chariot en le rangeant sans perte notable de place, tout en repartant aisément avec le(s) sac(s).

Afin d'atteindre une partie au moins de ces buts, il est notamment proposé que le premier chariot soit pourvu d'une armature tubulaire dont une partie inférieure forme un cadre sensiblement horizontal:
- qui reçoit les roues, et,
- à partir de l'arrière de bords latéraux duquel se dressent fixement des montants, entre et en arrière desquels s'étend une poignée de manoeuvre du chariot, certains de ces montants:
- étant réunis transversalement à l'axe longitudinal pour définir au moins un arceau,
- tenant (directement ou indirectement) au moins un bras qui :
   * s'étend en avant desdits montants, à l'horizontale ou avec un angle par rapport à l'horizontale inférieur à +/-25°, en présentant une longueur suivant ledit axe longitudinal central,
   * dans un plan horizontal et sur l'essentiel au moins de sa longueur, est situé plus près de cet axe longitudinal central que d'un plan vertical passant par l'un ou l'autre desdits bords latéraux du cadre,
   * et présente longitudinalement des supports pour y suspendre des sacs à provisions, de façon amovible, le long et de part et d'autre de ce bras, et,
- définissant entre eux un espace transversal ouvert permettant, sacs non suspendus, d'y engager le(s) bras du second chariot, sous la poignée de manoeuvre, tandis que le cadre inférieur reçoit celui de ce second chariot.

Ainsi, on associera un faible encombrement du chariot (bras central ou pratiquement ; essentiellement proche de l'axe longitudinal précité), un encastrement profond et pratique, un important espace de rangement (zones pour sacs suspendus), et une grande solidité (arceau, bras tenu par les montants arrière, armature tubulaire).

Selon une autre caractéristique, il est proposé que chaque chariot comprenne, juste au-dessus dudit cadre de l'armature tubulaire, une plateforme inférieure de chargement qui:
- est montée pivotante sur le cadre, suivant un axe perpendiculaire à ladite direction longitudinale, par deux pivots arrière situés vers les bords latéraux arrière de la plateforme,
- et/ou présente deux niveaux, respectivement arrière, et avant, ce dernier étant surélevé par rapport au niveau arrière.

Ainsi, la zone de chargement et la rigidité du chariot seront accrues, avec un accès demeurant aisé, sans gêner l'encastrement.

Egalement toujours pour favoriser ce dernier point et pour une praticité de manoeuvre des sacs à suspendre, ou suspendus, il est aussi recommandé que lesdits supports de sacs du premier chariot comprennent des supports pour suspendre les sacs en porte-à-faux, par crochetage, et qui sont disposés à l'écart de la zone où s'engage(nt) le(s) bras du second chariot.

Encore pour favoriser la capacité d'emboîtement des chariots et leur praticité d'emploi, on recommande que :
- le premier chariot comprenne deux dits bras présentant longitudinalement lesdits supports des sacs et, à l'arrière, entre eux, une ouverture qui communique avec ledit espace transversal pour permettre l'engagement des bras du second chariot entre ceux du premier, ces bras allant en se rapprochant vers l'avant,
- et/ou de préférence que le(s) bras soi(en)t tenu(s) uniquement à l'arrière, par les montants, de sorte qu'ils s'étendent de là, vers l'avant, en porte-à-faux. On préfèrera alors que ce(s) bras s'étend(ent) en s'allongeant vers l'avant au dessus de la plateforme, depuis lesdits montants arrière de la structure tubulaire.

Pour éviter qu'une mauvaise manoeuvre lors d'un rangement puisse endommager un des bras de suspension des sacs, risquant par exemple d'altérer la capacité à les emboîter par interengagement, il est par ailleurs conseillé qu'à l'avant les deux bras soient réunis entre eux, de manière qu'ils dessinent une forme en épingle allant en s'évasant vers l'arrière.

Pour allier encore solidité et facilité d'encastrement entre chariots, on conseille que le(s) bras soi(en)t raccordé(s) rigidement audit arceau, ou à l'un au moins d'entre eux, pour un report d'effort.

Pour une protection de la structure tubulaire, une sécurité pour les utilisateurs et toujours la facilité des emboîtements, est par ailleurs conseillée l'adjonction sur chaque chariot d'une structure en matière synthétique présentant (à l'écart du passage réservé à l'encastrement) deux flancs latéraux se dressant autour des montants, jusqu'au dessus du niveau où s'étendent le(s) bras, ces flancs latéraux, qui débordent devant et derrière lesdits montants pour les habiller au moins extérieurement étant réunis transversalement à l'axe longitudinal pour définir une arche transversale ouverte, dressée jusque sensiblement au niveau de la poignée, au-dessus du niveau du (des) bras, de sorte que le(s) bras du second chariot peuvent s'engager à travers ladite arche du premier chariot.

Et, outre pour ce qui précède, favoriser aussi la conduite des chariots, on recommande qu'au-dessus du niveau du(des) bras, l'arche dressée se courbe vers l'arrière pour reculer la poignée de guidage du chariot.

Autant il est important pour le client que son sac soit suspendu ouvert au moment où doit y placer ses achats, autant il faut éviter que les sacs chargés soient instables. Et il ne faut pas que les moyens permettant d'éviter altèrent les fonctionnalités précédentes : encastrement performant et facilité de manoeuvre, en particulier.

Aussi est-il alors conseillé que les bras du premier chariot comprennent, ou plutôt portent, au moins une butée qui soit :
- située à l'écart de là où le second chariot s'engage dans le premier,
- et contre laquelle viennent porter des sacs suspendus dos à dos, de façon à limiter alors leur libre basculement, transversalement audit axe longitudinal.

De façon complémentaire, on recommande que, dans le cas où le chariot comprend deux bras, chaque dite butée soit située sous le niveau du bras concerné et fixé à lui, ces deux butées allant en se rapprochant vers l'avant, pour permettre ledit engagement d'un chariot dans l'autre, et appartenant chacune à un élément de reprise d'effort formant étai pour le bras.

Ainsi on conjuguera à nouveau encastrement et solidité accrue (résistance au vandalisme).

Encore pour un encastrement performant et l'obtention possible d'un espace de rangement supplémentaire, il est conseillé que les bras du premier chariot se présentent comme deux tronçons convergents vers l'avant, avec deux chicanes à un même endroit de leurs longueurs respectives en élargissant ainsi vers l'arrière, à proximité desdits montants, l'espace entre les tronçons où peuvent s'engager:
- soit les bras du second chariot,
- soit un dit sac alors suspendu à des supports complémentaires fixés à l'armature.

Si butée sur le chariot il y a, on conseille que celle-ci soit rapportée, fixée au bras. Elle pourra en particulier comprendre un arceau (barre cintrée). Ceci pourra favoriser le placement à cet endroit d'une plaquette publicitaire, sans augmenter le poids du bras, ni entraver l'encastrement des chariots entre eux.

A ce sujet, pour que le chariot puisse être un véhicule publicitaire, sans altérer notamment sa fonction de support de suspension pour sacs, en permettant que ceux-ci puissent toujours être facilement montés, retirés et remplis ou vidés et que les chariots soient toujours bien encastrables, on recommande que le(chaque) bras, qui présente donc, le long de sa direction d'allongement et dans son environnement immédiat un passage libre où peu(ven)t passer le(s) bras dudit second chariot, soit pourvu de supports publicitaires :
- soit situés à l'écart dudit passage libre réservé pour le(s) bras dudit second chariot,
- soit qui empiètent dans ce passage libre, des moyens mobiles de sollicitation permettant alors de les en écarter au passage du(des) bras du second chariot.

Ci-après on va maintenant présenter plusieurs réalisations de chariots du type précité, à titre toutefois d'exemple uniquement, et en liaison avec des figures où :
Figure 1, on voit le chariot de 3/4 arrière,
Figures 2, 3, 4 on voit le chariot respectivement d'arrière, de côté et de dessus,
Figures 5, 6, on voit le chariot en éclaté,
Figure 7, on voit le chariot en éclaté et notamment sans sa plateforme ni son arche d'habillage,
Figure 8, on voit le chariot chargé de sacs sur son/ses bras supérieurs et sa plateforme inférieure, et
Figures 9,10, on voit autre un chariot,
Figure 11 on voit ce chariot chargé de quatre sacs, deux par côté,
Figures 12,13,14 puis 15,16,17 on voit deux variantes de réalisation de la plateforme,
Figure 18, on voit un cinquième sac en place face à la poignée de manoeuvre du chariot,
Figure 19, on voit un chariot à bras de suspension étayé à l'arrière,
Figure 20, on voit une vue locale de dessus du chariot des figs.9 et suivantes,
Figures 21,22,23 on voit la mise en place de plaquettes publicitaires, et
Figure 24, on voit plusieurs chariots des figs.1-4 encastrés ensemble.

Figuré, on voit donc un chariot de supermarché 1 engageable dans un autre chariot identique 10, pour un rangement compact.

Le chariot 1 présente un avant 1a (AVT), un arrière 1b (ARR) et un axe longitudinal 1c qui intersecte cet avant et cet arrière.

Le chariot 1 est pourvu d'une armature tubulaire 5 fixe dont une partie s'étend vers le haut, à l'endroit de montants 15a, 15b.

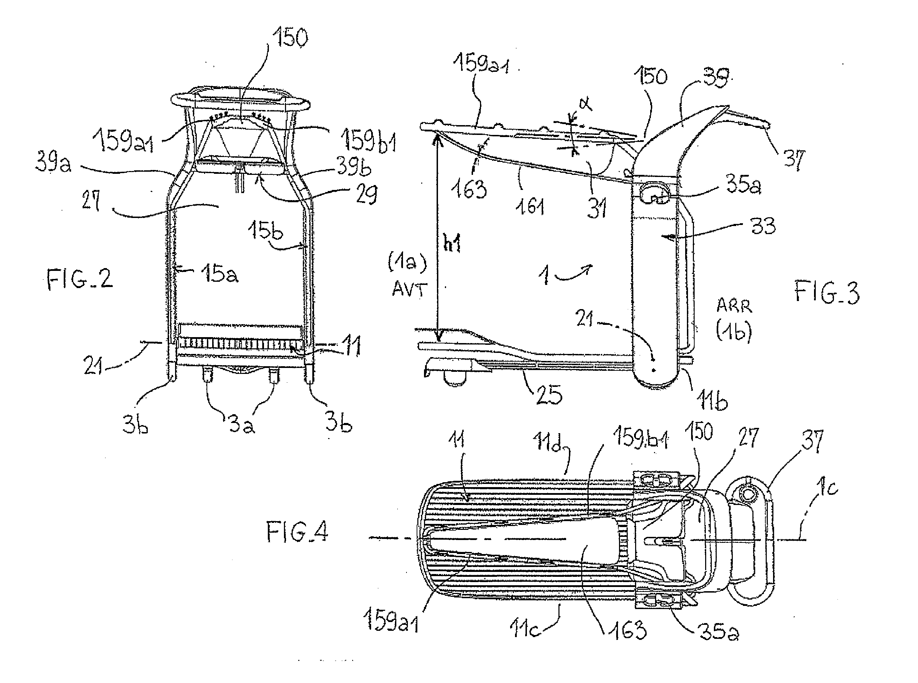

Il peut rouler grâce aux roues arrière 3b et avant 3a montées pivotantes autour d'axes horizontaux. Ces roues sont plus écartées à l'arrière qu'à l'avant (figure 2). Eventuellement, il pourrait n'y avoir qu'une roue avant. La(les) roue(s) sont fixées à l'armature 5.

Le chariot 1 est favorablement pourvu d'une plateforme inférieure 11 de chargement.

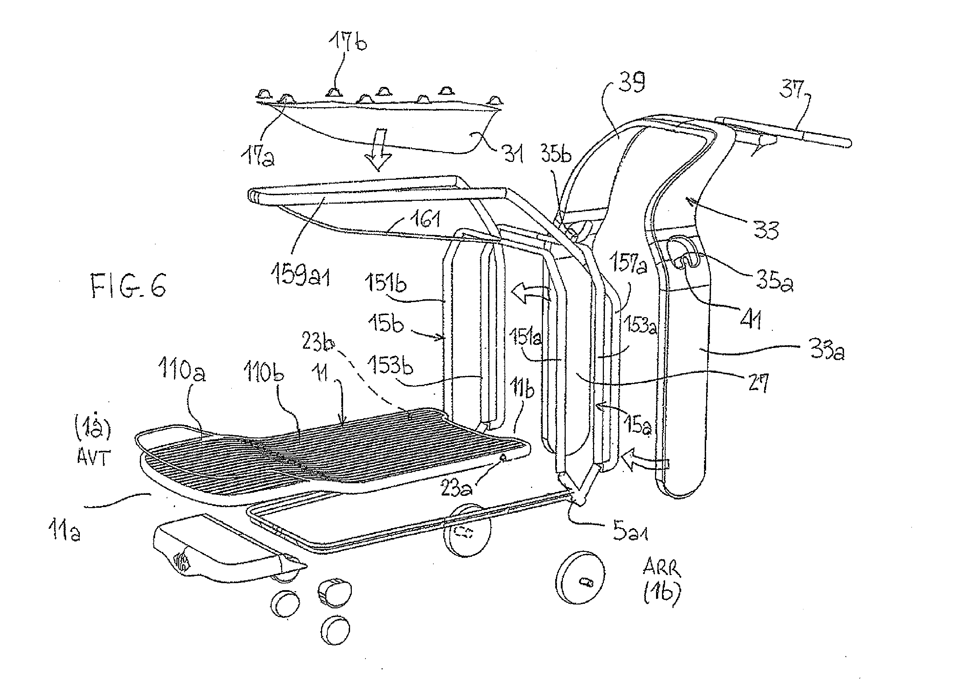

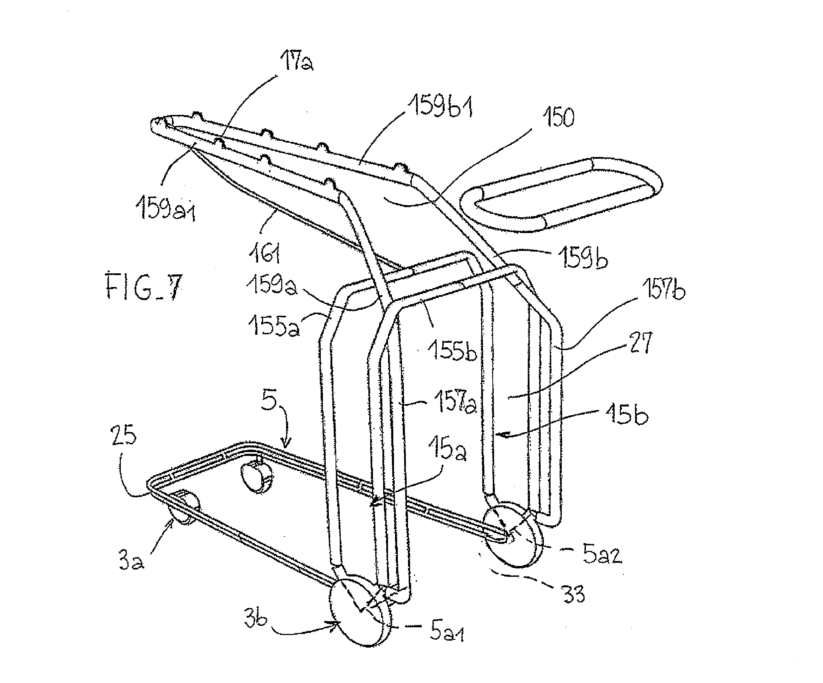

Comme on le voit sur les figures, les montants, repérés de façon générale 15a, 15b, se dressent à partir de deux zones a1, 5a2 (figures 6, 7) situées latéralement près de l'arrière de bords latéraux 11c, 11d d'un cadre 25 qui s'étend sous la plateforme 11.

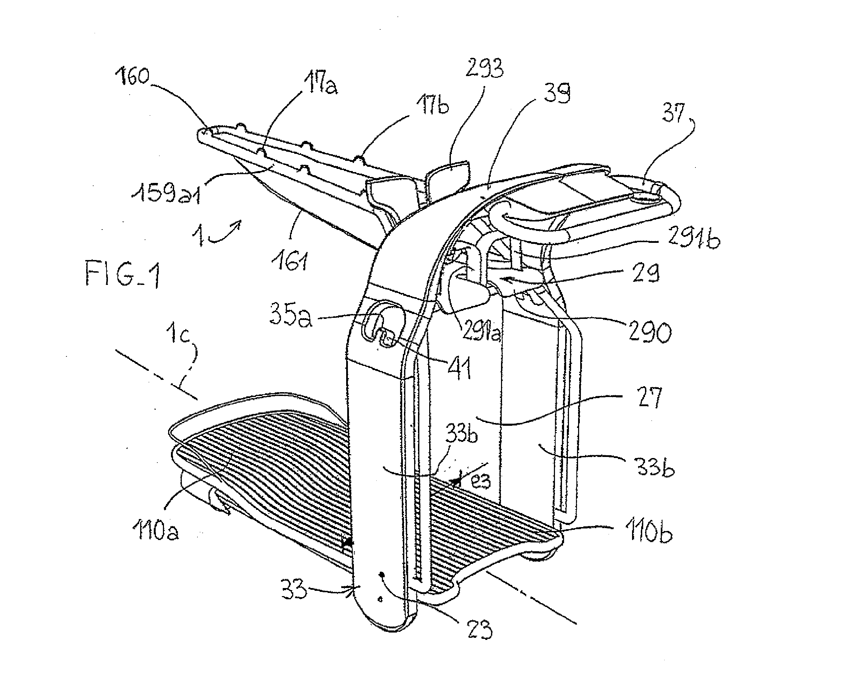

Dans la version préférée illustrée figures 1-8, certains de ces montants, repérés 151a, 151b, 153a, 153b, sont réunis transversalement à l'axe longitudinal 1c, pour définir un ou plusieurs arceaux dressés.

Ici, il y a deux arceaux 155a, 155b qui se dressent parallèlement l'un à l'autre et sont réunis à leur base par un raccord en « Y ». Eventuellement, seul un arceau vertical, ou sensiblement vertical, pourrait être prévu, toujours dans un plan perpendiculaire à l'axe 1c.

Considérons la solution à deux arceaux (ce qui suit pouvant s'appliquer au cas un arceau) :

Ici, au-dessus des deux arceaux 155a, 155b s'élèvent encore d'autres dits montants, 159a,159b, qui s'incurvent ensuite vers l'avant pour former des bras.

Deux bras allongés 159a1, 159b1 s'étendent à l'horizontale ou avec un angle d'écartement par rapport à l'horizontale inférieur à +/-25°.

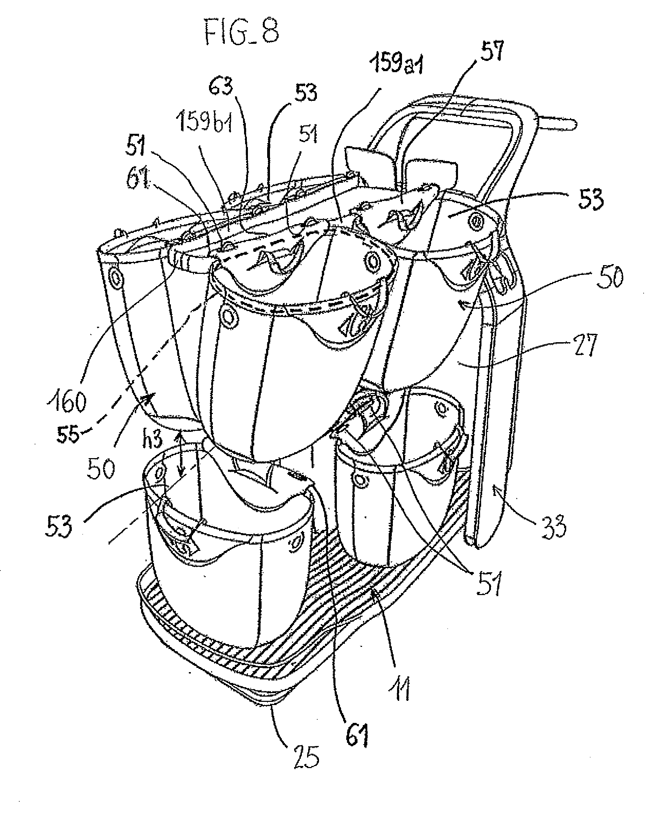

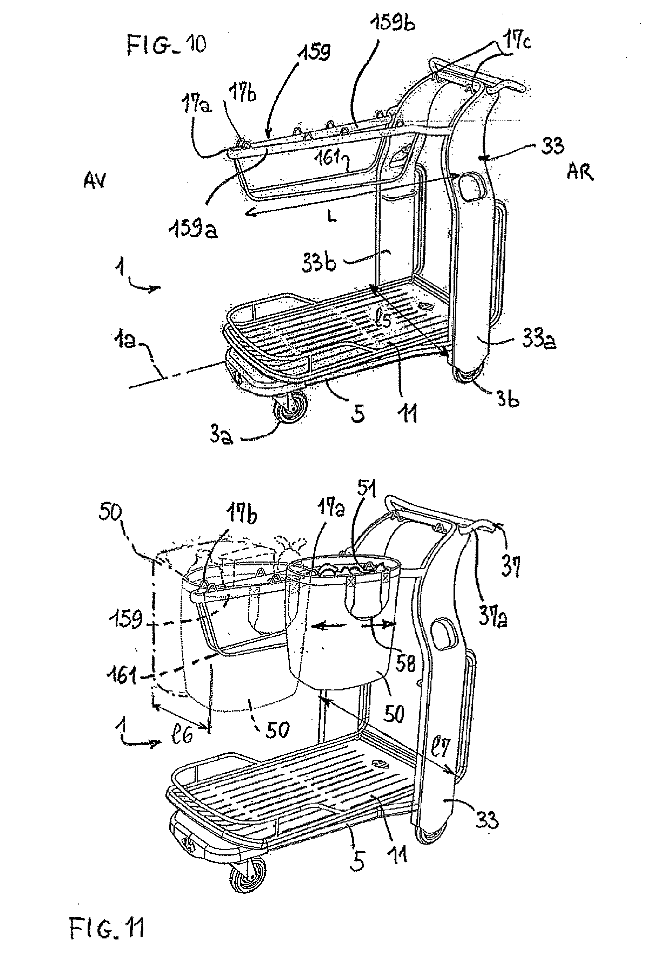

Ces bras 159a1, 159b1 présentent chacun, longitudinalement, des supports 17a,17b....pour y suspendre des sacs 50 (figures 8,11).

A l'arrière, il existe une ouverture 150 entre les bras 159a, 159b.

Ici, les deux bras sont réunis entre eux à l'avant, en 160, de manière qu'ils dessinent une forme en épingle allant en s'évasant vers l'arrière.

Pour un report d'effort, on recommande que lesdits bras 159a1, 159b1 soient raccordés rigidement à l'arceau unique, ou à l'un au moins des deux arceaux 155a, 155b.

Sur plusieurs des figures 1 à 7, on voit aussi que, plus bas que 1' (les) arceau (x) 155a, 155b, les montants, 159a, 159b, qui s'incurvent vers l'avant se dressent plus à l'arrière que cet(ces) arceau(x), en définissant là des poignées allongées vers le haut, 157a, 157b, par exemple pour un enfant sur une planche à roulettes se tenant là.

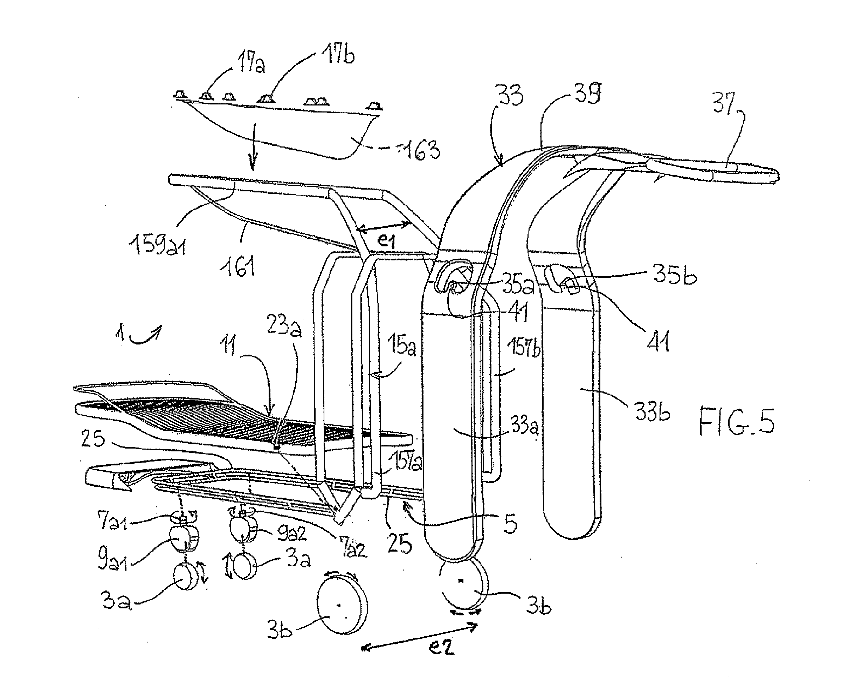

Quant à la plateforme 11, elle est :
- montée pivotante sur l'armature tubulaire 5 (par exemple les montants 15a, 15b), suivant un axe 21 perpendiculaire à la direction longitudinale 1c du chariot, par deux pivots arrière 23a, 23b situées vers lesdites zones latérales proches de l'arrière des bords latéraux de la plateforme (figures 5, 6),
- et/ou présente deux niveaux, respectivement arrière 110b et avant 110a, le niveau avant 110a étant surélevé par rapport au niveau arrière.

Si la solution à deux niveaux est retenue seule, on conseille que la longueur axiale (suivant 1c) de chaque niveau soit égal à environ 50% de la longueur totale de la plateforme 11, pour favoriser un engagement important.

Sous cette plateforme inférieure, on recommande que l'armature tubulaire 5 présente donc une partie 25 en forme de cadre horizontal ou sensiblement horizontal auquel les roues, ici toutes les roues 3a, 3b, sont liées (attaches des arbres de pivotement 7a1, 7a2).

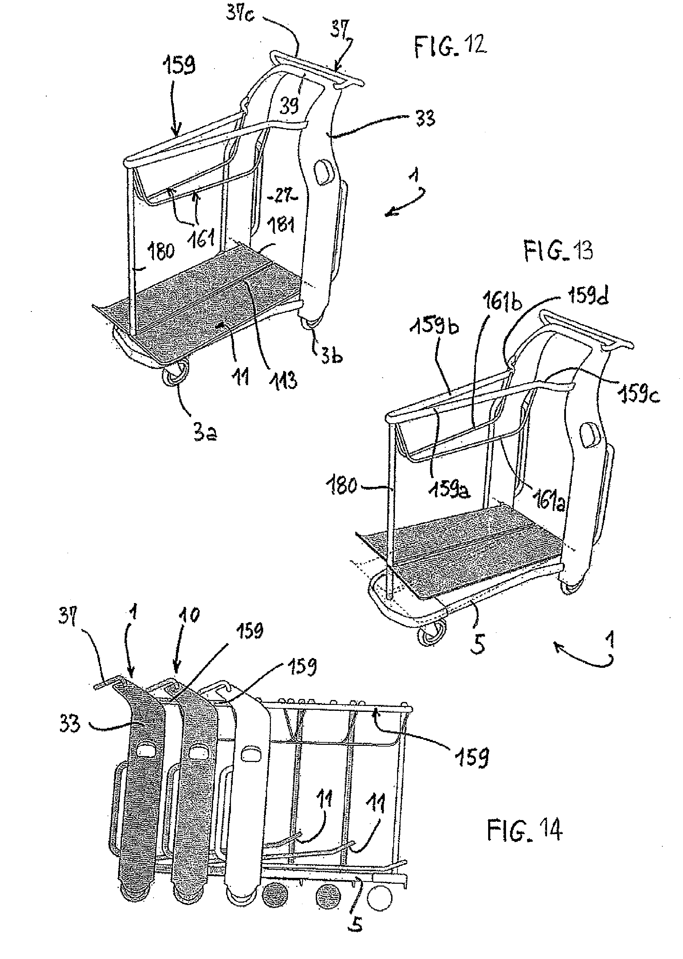

Pour favoriser l'emboîtement de rangement, les figures montrent que l'arceau (ici les deux arceaux) 155a, 155b, encadre(nt), perpendiculairement à l'axe 1c, un espace 27 totalement ouvert, pour offrir par là un libre passage depuis ou vers la plateforme inférieure de chargement 11, et/ou un libre engagement de ladite plateforme inférieure d'un chariot identique, depuis l'arrière, comme montré figure 13.

Comme illustré, cet espace ouvert 27 occupera favorablement tout l'espace au milieu du ou des arceau(x), tels 155a, 155b, et ce même au-delà, jusqu'au-dessus des bras support 159a1, 159b1 (sauf à l'endroit du siège enfant 29, s'il est installé).

Sur différentes figures, on remarquera également que sera favorablement prévue une structure 33 en matière synthétique présentant deux flancs latéraux 33a, 33b se dressant autour des montants, ici 151a, 151b, 153a, 153b, jusqu'au dessus du niveau où s'étendent les bras 159a1, 159b1 ; cf. figure 6 notamment.

Pour les flancs, un plastique dur conviendra. Les flancs latéraux pourront enrober intérieurement et extérieurement le(s) arceau (x) .

On notera qu'ils déborderont de préférence, devant et derrière (cf. figure 1) lesdits montants, pour les habiller donc au moins extérieurement.

En outre, ces flancs latéraux présentent ici des moyens, tels 35a, 35b, de maintien d'un article sur le chariot situés à une hauteur intermédiaire entre la plateforme 11 et les bras support 159a1, 159b1.

Ces moyens, tels 35a, 35b, de maintien pourront comprendre un passage formé de biais et présentant un crochet 41 de suspension d'un sac et/ou offrant une zone de maintien pour un article rigide allongé, tel le balai tête en haut précité, qui pourra ainsi être glissé verticalement, si nécessaire.

De préférence à titre complémentaire, les flancs 33a,33b seront réunis entre eux, transversalement à l'axe longitudinal 1c, pour définir une arche 39 dressée jusqu'au-dessus du niveau des bras 159a1, 159b1.

De préférence, chaque flanc latéral de l'arche 39 s'incurvera vers l'intérieur à un niveau intermédiaire entre ceux de la plateforme 11 et desdits bras support des sacs, au moins à l'endroit de leur ouverture arrière 150, les moyens 35a,35b de maintien de l'article étant situés, au moins pour partie, à l'endroit de cette incurvation intermédiaire de l'arche.

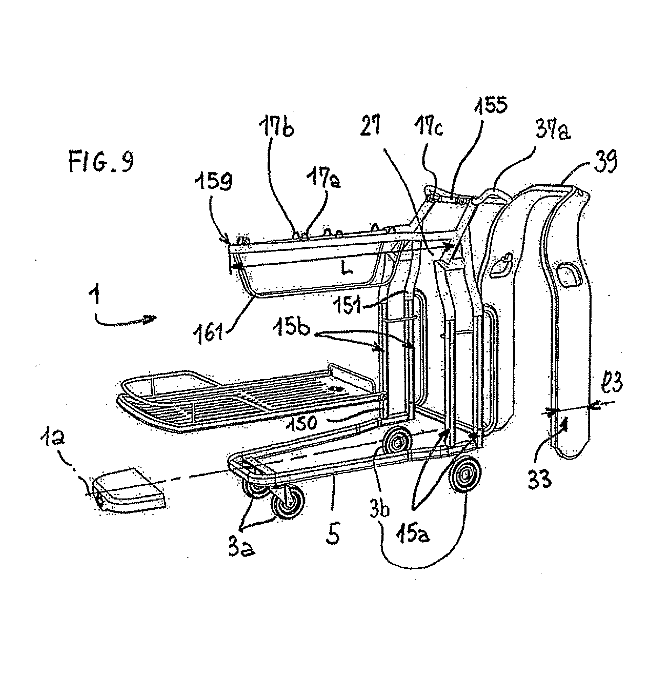

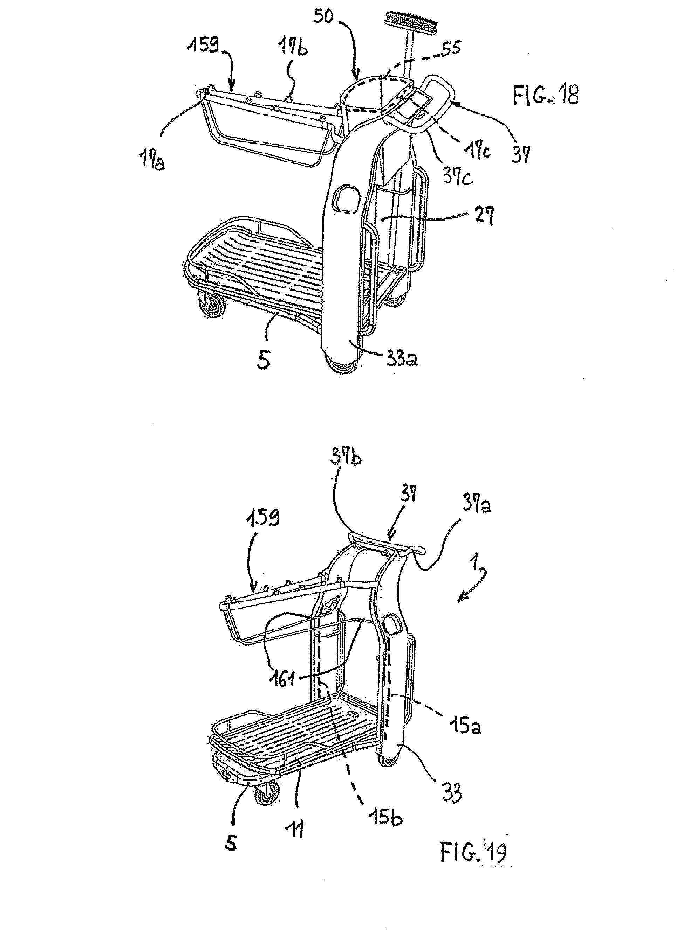

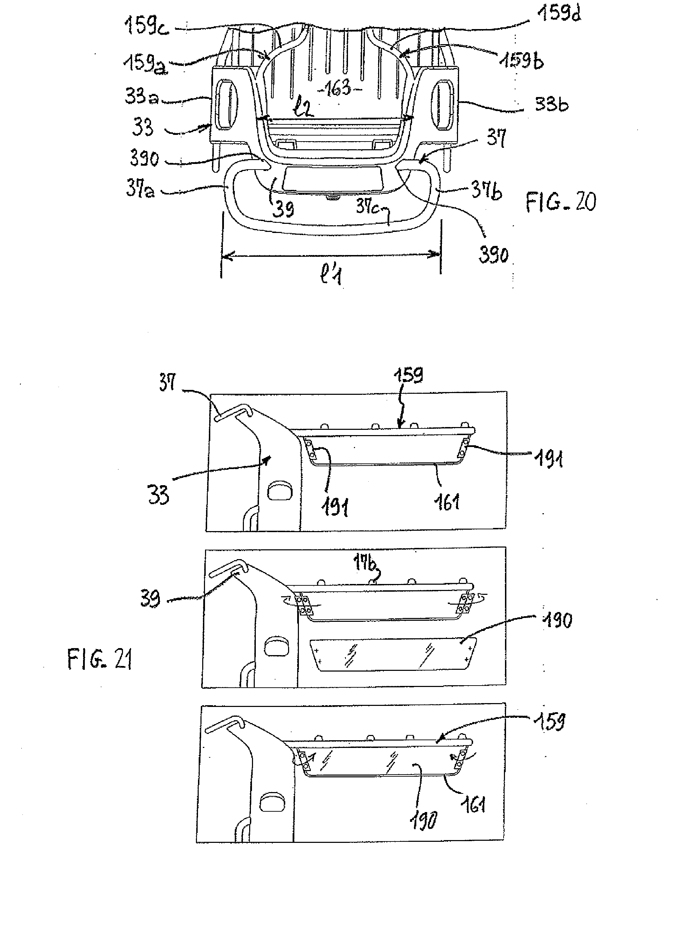

Pour le guidage du chariot, une poignée 37 est portée en porte-à-faux par l'armature 5, de préférence au niveau de l'arche 39. Ce niveau est celui de l'arceau 155 (fig.9) ou au-dessus de celui des arceaux 155a,155b (fig.5). La poignée 37 s'étend transversalement à l'axe 1c, entre les montants précités (à l'arrière de ceux-ci), avec une barre 37c sensiblement horizontale (figs.18,20). La poignée 37 comprendra de préférence des tronçons latéraux de forme ondulée ; voir figures. Dans les réalisations préférées illustrées, la poignée 37 est située derrière les montants 15a,15b..., tandis que le (s) bras 159... s'étendent uniquement à l'avant de ces montants, depuis ceux-ci.

Pour reculer cette poignée de guidage 37, on recommande qu'au-dessus du niveau des bras 159,159a1, 159b1, l'arche dressée 39 se courbe vers l'arrière, comme montré notamment figures 3,5,6.

Pour y suspendre un autre sac, ou y passer un article allongé, par exemple un balai manche en bas, chaque flanc latéral, 33a ou 33b, de l'arche 39 s'incurvera de préférence vers l'intérieur, à un niveau intermédiaire entre ceux de la plateforme 11 et des bras 159a1, 159b1, ceci au moins à l'endroit de leur ouverture arrière 150.

Revenant maintenant à la manière de suspendre les sacs à provision, on notera l'intérêt à ce que les supports, tels 17a,17b, se dressent individuellement vers le haut, à la manière de crochets, pour recevoir un/des oeillet (s) 51 de suspension des sacs 50 ; cf. figures 8, 9.

Ces moyens supports disposés sur un bord du sac pour le suspendre de manière qu'alors il pende en décalage latéral par rapport à son support.

Ainsi, les moyens supports 51 complémentaires desdits supports 17a ou 17b, des bras 159a1, 159b1 permettent au sac d'être suspendu en pendant alors latéralement à l'extérieur des bras 159a1, 159b1, en partie supérieure.

Près de l'ouverture supérieure 53 du sac permettant de le remplir et le vider, et de préférence autour d'elle, des moyens 55 de sollicitation vers un état ouvert, sollicitant le sac vers cet état au moins lorsqu'il est ainsi suspendu, sont prévus.

Typiquement, il pourra s'agir d'un anneau déformable mais relativement rigide, naturellement de forme sensiblement en ellipse ou arrondie que l'on pourra aplatir mais qui est à mémoire de forme.

Ces moyens 55 de sollicitation pourront être logés dans un passage interne de doublure.

Dans le cadre d'une recherche d'équilibre du chariot, y compris s'il est chargé en sacs suspendus à un des bras seulement (ou à côté seulement dudit bras, s'il est unique), ce(s) bras 159a1, 159a2 sera(ont) (con)centrés suivant l'axe longitudinal 1c et l'écartement e1 entre eux à l'endroit de l'ouverture arrière 150 sera de préférence inférieur à l'écartement e2 entre les roues arrière 3b (voir figure 5), ou à la dimension e3 (figure 1) que la plateforme 11 présente au droit de cette ouverture, perpendiculairement à ladite direction longitudinale 1c, de manière que le(les) sac(s) soi(en)t suspendu(s) au moins essentiellement au dessus de la plateforme (voir figure 8).

Quant à la recherche de praticité déjà évoquée, si l'on considère un sac 50 suspendu à l'un au moins desdits supports des bras, on la favorisera avec un écartement en hauteur h1 (figure 3) entre les bras support 159a1, 159a2 et la plateforme inférieure 11, ainsi qu'une hauteur h2 des sacs, adaptés pour que, sacs pour certains suspendus auxdits bras support, pour d'autres posés sur la plateforme inférieure, comme figure 8, il demeure encore un espace vertical h3 pour accéder, par cet espace, à l'intérieur desdits sacs posés. Une hauteur h3 d'au moins 15cm, et de préférence entre 20cm et 40cm, est conseillée.

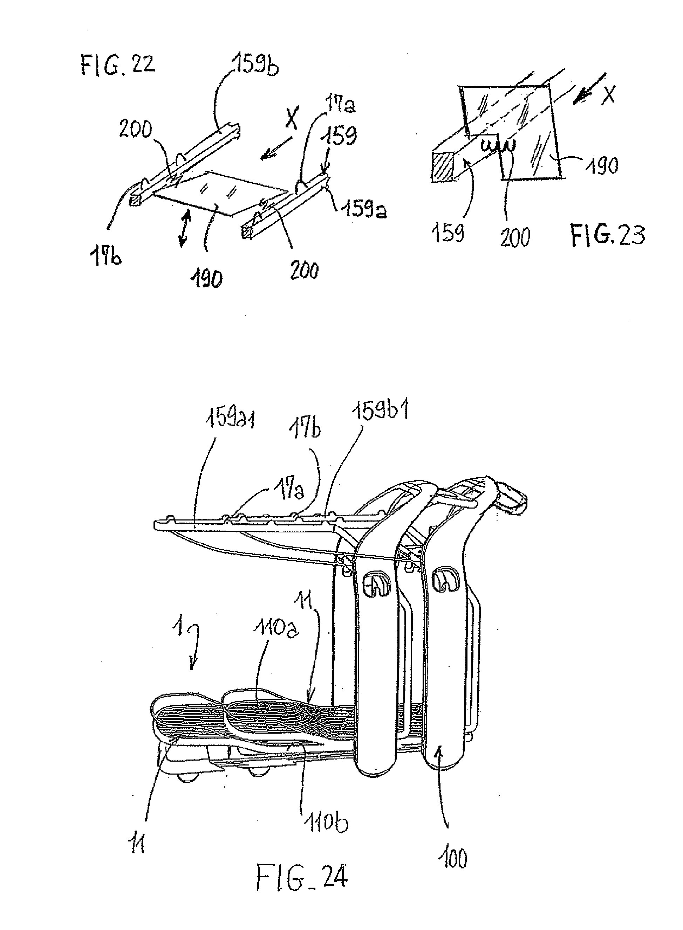

Figure 24, on voit deux chariots identiques 1, 100 engagés horizontalement l'un dans l'autre, en position de rangement compact.

En poussant vers le premier chariot 1 le second 100 placé derrière, les bras de ce dernier s'engagent entre ceux du premier chariot, avec alors en même temps engagement, à travers l'ouverture globale arrière 27-150, de la plateforme du second chariot le long et par-dessus celle du premier chariot, avec basculement vers le haut de la plateforme du second et/ou passage du niveau avant surélevé 110a de la plateforme du second chariot par-dessus le niveau arrière plus bas 110b de celle du premier chariot.

Figs.9 et suivantes, comme dans les figures précédentes, le(s) bras, tels ici 159a1, 159b1, est(sont) tenu(s) uniquement à l'arrière, par les montants 15a,15b (par exemple par soudage), de sorte qu'ils s'étendent donc de là, vers l'avant, en porte-à-faux.

Pour limiter/bloquer par ailleurs un possible basculement/balancement des sacs, il est conseillé que, ici sous le niveau du bras 159 et porté par lui, s'étende au moins une butée, telle 161, (de préférence une double avec positionnement dos à dos) contre laquelle viendront porter les sacs suspendus. Les sacs viendront buter par l'arrière, du côté où ils sont suspendus par les moyens 51. De préférence la butée s'opèrera vers le milieu du sac.

Pour la tenue aux charges du bras 159, au moins un élément 161 de reprise d'effort (ici deux) peu(ven)t former étai(s) pour le bras. La butée précitée peut appartenir à cet étai ; fig.18.

Fig.18, l'étai 161 est lié d'une part à l'avant du bras, d'autre part, à l'arrière, aux montants 15a,15b qui reprennent les efforts. Il comprend ici deux branches allongées ainsi liées, en passant sous le bras, sans gêner pour l'encastrement comme on le voit.

Fig.13 par exemple, on voit une butée à deux branches 161a,161b, s'étendant respectivement sous les (le niveau des) tronçons 159a,159b du bras, sensiblement parallèlement à eux. La butée présente une forme globale d'arche inversée, comme illustré sur plusieurs vues.

Comme illustré notamment figs.13,20 et pour un encastrement performant, le bras 159 comprend ici deux tronçons 159a,159b convergents vers l'avant et qui présentent deux chicanes 159c,159d, à un même endroit de leurs longueurs respectives. Ceci élargit vers l'arrière l'espace entre les tronçons pour créer entre eux, à proximité donc des montants arrière 15a,15b, un espace central libre 163 de réception d'un sac (fig.18 notamment). Un ou deux supports 17c prévus sur la traverse 155 joignant les montants permettent de suspendre ce cinquième sac de dos, donc de la même manière que les autres, mais perpendiculairement à eux, face à l'avant du chariot ; voir figs.11,18. Sacs absents, les bras du chariot arrière peuvent s'engager dans l'espace élargi 163, améliorant ainsi le guidage.

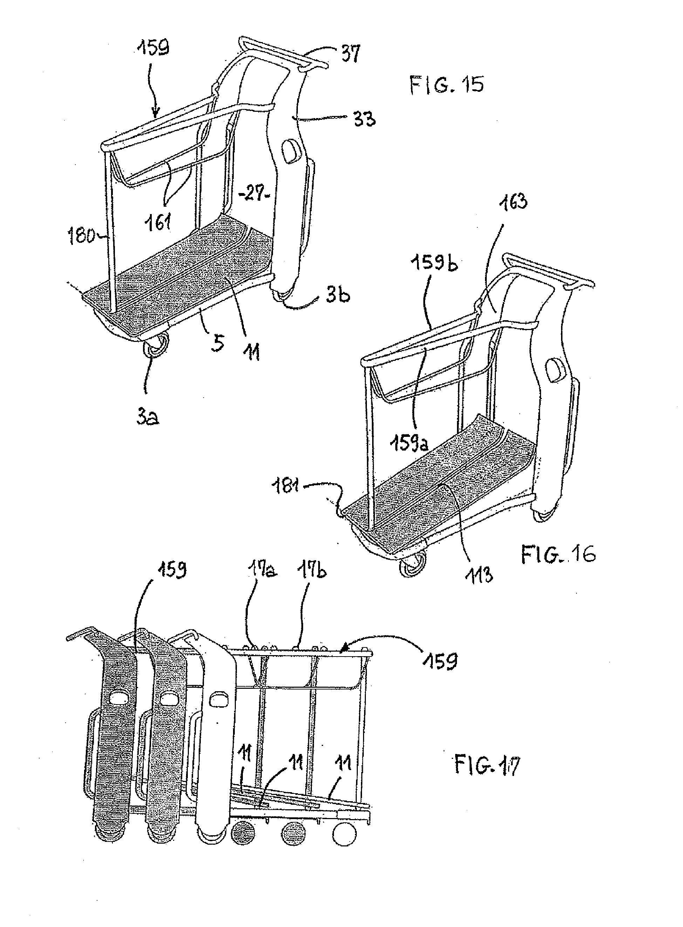

Pour apporter un renfort au bras, on prévoit figs.12,15 que le bras 159 sera favorablement lié, vers l'avant, à un étai 180 s'étendant vers le bas et fixé au châssis 5. Il ne sera ainsi plus en porte-à-faux, comme il l'est dans les versions précédentes.

Pour que chaque chariot puisse être un véhicule publicitaire, sans altérer notamment sa fonction de support performant de suspension pour sacs, avec capacité d'encastrement entre chariots identiques, on recommande que le/chaque bras 159... :
- soit de préférence de longueur fixe L (non télescopique),
- et soit pourvu de supports publicitaires 190 :
   * situés à l'écart dudit passage libre réservé pour le bras du second chariot (cf. fig 21),
   * ou bien qui empiètent dans ce passage libre, des moyens mobiles 200 de sollicitation permettant alors de les en écarter au passage du bras du second chariot ; cf. figs.22,23.

Fig.21, le support publicitaire 190 est un plaque disposée à l'endroit de l'arceau ou de au-dessus de l'étai 161. Il y est fixé de façon amovible par des clips 191. On peut en prévoir un par côté, donc par arceau ou étai.

Figs.22,23, les moyens mobiles de sollicitation 200 comprennent des moyens ressort ou élastiquement déformables.

Il peut s'agir de lamelles flexibles ou de ressorts extensibles qui se déforment sous la poussée de la partie concernée du second chariot, lors d'un encastrement. On préfèrera une liaison amovible entre les moyens 200 et soit le support publicitaire 1900 concerné, soit le(s) bras 159 en cause, par exemple une liaison par crochetage amovible.

On peut ainsi imaginer un ou plusieurs supports publicitaires en forme de panneaux, normalement allongés sensiblement à plat (légèrement inclinés vers l'arrière) entre les tronçons 159a,159b du bras, comme fig.22, pour faire alors face au client poussant le chariot derrière sa poignée 37. Des moyens mobiles de sollicitation 200 les lient de part et d'autre auxdits tronçons 159a,159b. La poussée horizontale du bras d'un chariot arrière identique venant s'encastrer provoquera la déformation élastique desdits moyens 200 (flèche), permettant ainsi au support 190 concerné de s'échapper sans dommage, par exemple en glissant sous le bras du chariot arrière.

Avec une solution à un seul bras axial 159, comme fig.23, on peut encore imaginer un ou plusieurs supports publicitaires 190, en forme de panneau dressé sur le côté et/ou au-dessus du bras, en faisant face au client situé derrière la poignée du chariot. Un moyen mobile de sollicitation 200 (par exemple un ressort) le tient normalement ainsi, en le liant au bras, lequel est situé à côté dans l'exemple. Sous une poussée frontale (flèche X figurée), il est entraîné en mouvement d'escamotage (tel qu'un basculement), par déformation élastique dudit moyen 801, et se redresse quand il est libéré, par retour élastique du moyen 200.

A partir de ce qui précède et des figures, on aura noté que, de préférence, le(s) bras 159,159a,159b sera(ont) fixe(s) vis-à-vis des montants tels 15a, une solution pivotante pour éviter leur glissement le long du(des) bras du chariot avant lors de l'encastrement d'un cadre 25 dans l'autre étant jugée a priori insuffisamment solide et peu pratique.

## Revendications

1. Ensemble comprenant un premier et un second chariots de supermarché, identiques, sur roues, engageables l'un dans l'autre pour un rangement compact et présentant un avant (1a), un arrière (1b) et un axe longitudinal central (1c) les intersectant, le premier chariot étant pourvu d'une armature tubulaire (5) dont une partie inférieure forme un cadre (25) sensiblement horizontal:
- qui reçoit les roues, et,
- à partir de l'arrière de bords latéraux duquel se dressent fixement des montants, entre et en arrière desquels s'étend une poignée (37) de manoeuvre du chariot, cet ensemble étant **caractérisé en ce que** certains de ces montants:
- sont réunis transversalement à l'axe longitudinal (1c) pour définir au moins un arceau (155a, 155b),
- tiennent au moins un bras qui :
* s'étend en avant desdits montants, à l'horizontale ou avec un angle par rapport à l'horizontale inférieur à +/-25°, en présentant une longueur (L) suivant ledit axe longitudinal central (1c),
* dans un plan horizontal et sur l'essentiel au moins de sa longueur, est situé plus près de cet axe longitudinal central (1c) que d'un plan vertical passant par l'un ou l'autre desdits bords latéraux du cadre (25),
* et présente longitudinalement des supports (17a, 17b...) pour y suspendre des sacs à provisions (50), de façon amovible, le long et de part et d'autre de ce bras, et,
- définissent entre eux un espace transversal ouvert (27) permettant, sacs non suspendus, d'y engager le(s) bras du second chariot (100), sous la poignée de manoeuvre, tandis que le cadre inférieur reçoit celui de ce second chariot.

2. Ensemble selon la revendication 1, **caractérisé en ce que** chaque chariot comprend, juste au-dessus dudit cadre (25) de l'armature tubulaire, une plateforme inférieure de chargement qui:
- est montée pivotante sur le cadre, suivant un axe perpendiculaire à ladite direction longitudinale (1c), par deux pivots arrière (23a, 23b)) situés vers les bords latéraux arrière de la plateforme,
- et/ou présente deux niveaux, respectivement arrière (110b), et avant (110a), ce dernier étant surélevé par rapport au niveau arrière.

3. Ensemble selon la revendication 1 ou 2, **caractérisé en ce que** lesdits supports de sacs du premier chariot comprennent des supports (17a, 17b...) pour suspendre les sacs en porte-à-faux, par crochetage, et qui sont disposés à l'écart de la zone où s'engage(nt) le(s) bras du second chariot (100).

4. Ensemble selon l'une au moins des revendications 1 à 3, **caractérisé en ce que** le premier chariot comprend deux dits bras (159a1, 159b1) présentant longitudinalement lesdits supports (17a, 17b...) des sacs et, à l'arrière, entre eux, une ouverture (150) qui communique avec ledit espace transversal (27) pour permettre l'engagement des bras du second chariot (100) entre ceux du premier (1), ces bras (159a1, 159b1) allant en se rapprochant vers l'avant.

5. Ensemble selon la revendication 4, **caractérisé en ce qu'**à l'avant les deux bras sont réunis entre eux, de manière qu'ils dessinent une forme en épingle allant en s'évasant vers l'arrière.

6. Ensemble selon l'une des revendications précédentes, **caractérisé en ce que** le(s) bras (159a1, 159b1) est(sont) tenu(s) uniquement à l'arrière, par les montants (15a,15b), de sorte qu'ils s'étendent de là, vers l'avant, en porte-à-faux.

7. Ensemble selon l'une au moins des revendications précédentes, **caractérisé en ce que** le(s) bras (159a1, 159b1) est(sont) raccordé(s) rigidement audit arceau (155a, 155b), ou à l'un au moins d'entre eux, pour un report d'effort.

8. Ensemble selon l'une des revendications précédentes, **caractérisé en ce que** chaque chariot comprend une structure (33) en matière synthétique présentant deux flancs latéraux (33a, 33b) se dressant autour des montants (155a, 155b), jusqu'au dessus du niveau où s'étendent le(s) bras (159a1, 159b1), ces flancs latéraux, qui débordent devant et derrière lesdits montants pour les habiller au moins extérieurement étant réunis transversalement à l'axe longitudinal (1c) pour définir une arche (39) transversale ouverte, dressée jusque sensiblement au niveau de la poignée, au-dessus du niveau du (des) bras (159a1, 159b1), de sorte que le (s) bras du second chariot peuvent s'engager à travers ladite arche (39) du premier chariot.

9. Ensemble selon la revendication 8, **caractérisé en ce qu'**au-dessus du niveau du(des) bras (159a, 159b, 159a1, 159b1), l'arche (39) dressée se courbe vers l'arrière pour reculer la poignée de guidage (37) du chariot (1, 100).

10. Ensemble selon la revendication 4 ou selon cette revendication 4 et l'une quelconque des revendications 5 à 9, **caractérisé en ce que** les bras du premier chariot portent au moins une butée (161) qui est :
- située à l'écart de là où le second chariot (100) s'engage dans le premier,
- et contre laquelle viennent porter des sacs (50,50b) suspendus dos à dos, de façon à limiter alors leur libre basculement, transversalement audit axe longitudinal (1c) .

11. Ensemble selon la revendication 4 ou cette revendication 4 et l'une des revendications 5 à 9, **caractérisé en ce que** les bras du premier chariot se présentent comme deux tronçons (159a,159b) convergents vers l'avant, avec deux chicanes (159c,159d) à un même endroit de leurs longueurs respectives, qui élargissent ainsi vers l'arrière, à proximité desdits montants, l'espace entre les tronçons où peuvent s'engager:
- soit les bras du second chariot,
- soit un dit sac alors suspendu à des supports complémentaires (17c) fixés à l'armature (5).

12. Ensemble selon les revendications 4 et 10, **caractérisé en ce qu'**une dite butée (161) est située sous le niveau de chaque bras (159) et fixé à lui, ces deux butées allant en se rapprochant vers l'avant, pour permettre ledit engagement d'un chariot dans l'autre, et appartenant chacune à un élément de reprise d'effort formant étai pour le bras.

13. Ensemble selon l'une des revendications précédentes, **caractérisé en ce que** le(chaque) bras (159), qui présente, le long de sa direction d'allongement et dans son environnement immédiat un passage libre où peu(ven)t passer le(s) bras dudit second chariot, est pourvu de supports publicitaires (190) :
- soit situés à l'écart dudit passage libre réservé pour le(s) bras dudit second chariot,
- soit qui empiètent dans ce passage libre, des moyens mobiles de sollicitation (200) permettant alors de les en écarter au passage du(des) bras du second chariot.

## Patentansprüche

1. Einheit, umfassend einen ersten und einen zweiten Einkaufswagen auf Rollen, die identisch sind und für eine kompakte Verstauung ineinander geschoben werden können und einen vorderen Teil (1a), einen hinteren Teil (1b) und eine zentrale Längsachse (1c), die sie schneidet, aufweisen,
wobei der erste Wagen mit einem röhrenförmigen Beschlag (5) versehen ist, dessen unterer Teil einen im Wesentlichen horizontalen Rahmen (25) bildet:
- der die Rollen aufnimmt, und
- vom hinteren Bereich von Seitenrändern desselben Steher fest aufragen, zwischen und hinter denen sich ein Schiebeholm (37) des Wagens erstreckt, wobei diese Einheit **dadurch gekennzeichnet ist, dass**
gewisse dieser Steher:
- quer mit der Längsachse (1c) verbunden sind, um mindestens einen Bogen (155a, 155b) zu definieren,
- mindestens einen Arm halten, der:
* sich vorne an den Stehern horizontal oder mit einem Winkel zur Horizontalen unter +/- 25° erstreckt, wobei er eine Länge (L) entlang der zentralen Längsachse (1c) aufweist,
* in einer Horizontalebene und auf mindestens dem Wesentlichen seiner Länge näher zu dieser zentralen Längsachse (1c) angeordnet ist als zu einer vertikalen Ebene, die durch den einen oder den anderen der seitlichen Ränder des Rahmens (25) verläuft,
* und in Längsrichtung Träger (17a, 17b, ...) aufweist, um auf diese Einkaufssäcke (50) auf abnehmbare Weise entlang und beiderseits dieses Arms zu hängen, und
- zwischen sich einen offenen quer verlaufenden Raum (27) definieren, der es ermöglicht, wenn keine Säcke aufgehängt sind, in ihn den Arm/die Arme des zweiten Wagens (100) unter dem Schiebholm einzufügen, während der untere Rahmen jenen dieses zweiten Wagens aufnimmt.

2. Einheit nach Anspruch 1, **dadurch gekennzeichnet, dass** der Wagen direkt über dem Rahmen (25) des röhrenförmigen Beschlags eine untere Ladeplattform aufweist, die:
- schwenkbar auf dem Rahmen entlang einer Achse senkrecht auf die Längsrichtung (1c) durch zwei hintere Zapfen (23a, 23b) montiert ist, die zu den hinteren seitlichen Rändern der Plattform angeordnet sind,
- und/oder zwei Ebenen, eine hintere (110b) bzw. eine vordere (110a) aufweist, wobei diese letztgenannte in Bezug zur hinteren Ebene überhöht ist.

3. Einheit nach Anspruch 1 oder 2, **dadurch gekennzeichnet, dass** die Sackträger des ersten Wagens Träger (17a, 17b, ...) umfassen, um die Säcke überstehend durch Haken aufzuhängen, und die von der Zone, in der der Arm/die Arme des zweiten Wagens (100) eingefügt werden, entfernt angeordnet sind.

4. Einheit nach mindestens einem der Ansprüche 1 bis 3, **dadurch gekennzeichnet, dass** der erste Wagen zwei Arme (159a1, 159b1) umfasst, die in Längsrichtung die Träger (17a, 17b, ...) für die Säcke und hinten zwischen ihnen eine Öffnung (150) aufweisen, die mit dem quer verlaufenden Raum (27) in Verbindung steht, um das Eingreifen der Arme des zweiten Wagens (100) zwischen jenen des ersten (1) zu ermöglichen, wobei sich diese Arme (159a1, 159b1) nach vorne hin annähern.

5. Einheit nach Anspruch 4, **dadurch gekennzeichnet, dass** vorne die beiden Arme miteinander verbunden sind, so dass sie eine Nadelform zeichnen, die sich nach hinten erweitert.

6. Einheit nach einem der vorhergehenden Ansprüche, **dadurch gekennzeichnet, dass** der Arm/die Arme (159a1, 159b1) nur hinten durch die Steher (15a, 15b) gehalten wird/werden, so dass sie sich von hier überstehend nach vorne erstrecken.

7. Einheit nach mindestens einem der vorhergehenden Ansprüche, **dadurch gekennzeichnet, dass** der Arm/die Arme (159a1, 159b1) starr mit dem Bogen (155a, 155b) oder mindestens mit einem von ihnen für eine Kraftverlagerung verbunden ist/sind.

8. Einheit nach einem der vorhergehenden Ansprüche, **dadurch gekennzeichnet, dass** jeder Einkaufswagen eine Struktur (33) aus Kunststoff umfasst, die zwei Seitenteile (33a, 33b) aufweist, die um Steher (155a, 155b) bis über die Höhe, auf der sich der/die Arm(e) (159a1, 159b1) erstrecken, aufragen, wobei diese Seitenteile, die vorne und hinten über die Steher hinausragen, um zumindest außen zu verkleiden, quer mit der Längsachse (1c) verbunden sind, um einen offenen quer verlaufenden Boden (39) zu bilden, der im Wesentlichen bis auf die Höhe des Holms über die Höhe des/der Arms/Arme (159a1, 159b1) aufragt, so dass der/die Arm(e) des zweiten Wagens durch den Bogen (39) des ersten Wagens eingeführt werden kann/können.

9. Einheit nach Anspruch 8, **dadurch gekennzeichnet, dass** über der Höhe des/der Arms/Arme (159a, 159b, 159a1, 159b1) der aufragende Bogen (39) nach hinten gebogen ist, um den Schiebeholm (37) des Wagens (1, 100) zurückzuschieben.

10. Einheit nach Anspruch 4 oder nach diesem Anspruch 4 und einem der Ansprüche 5 bis 9,
**dadurch gekennzeichnet, dass** die Arme des ersten Wagens mindestens einen Anschlag (161) tragen, der:
- sich in einem Abstand zu der Stelle, an der der zweite Wagen (100) in den ersten eingeschoben ist, befindet,
- und gegen den Säcke (50, 50b), die Rücken an Rücken aufgehängt sind, geschoben werden, um nun ihr freies Schwenken quer zur Längsachse (1c) zu begrenzen.

11. Einheit nach Anspruch 4 oder diesem Anspruch 4 und einem der Ansprüche 5 bis 9, **dadurch gekennzeichnet, dass** die Arme des ersten Wagens als zwei nach vorne zusammenlaufende Abschnitte (159a, 159b) vorhanden sind, mit zwei Schikanen (159c, 159d) an einer selben Stelle ihrer jeweiligen Längen, die auf diese Weise den Raum zwischen den Abschnitten nach hinten in der Nähe der Steher erweitern, in den eingreifen können:
- entweder die Arme des zweiten Wagens,
- oder ein an am Beschlag (5) befestigten komplementären Trägern (17c) aufgehängter Sack.

12. Einheit nach den Ansprüchen 4 und 10, **dadurch gekennzeichnet, dass** ein Anschlag (161) unter der Höhe jedes Arms (159) angeordnet und an diesem befestigt ist, wobei sich diese beiden Anschläge nach vorne hin annähern, um das Einführen eines Wagens in den anderen zu ermöglichen, und jeweils einem Kraftverlagerungselement angehören, das eine Stütze für den Arm bildet.

13. Einheit nach einem der vorhergehenden Ansprüche, **dadurch gekennzeichnet, dass** der (jeder) Arm (159), der entlang seiner Längsrichtung und in seiner unmittelbaren Umgebung eine freie Durchführung aufweist, durch die der/die Arm(e) des zweiten Wagens durchgeführt werden können, mit Werbeträgern (190) versehen ist:
- die sich entweder in einem Abstand zu der für den/die Arm(e) des zweiten Wagens vorgesehenen freien Durchführung befinden,
- oder die in diese freie Durchführung hineinragen, wobei es bewegliche Druckmittel (200) in diesem Fall ermöglichen, sie für die Durchführung des/der Arms/Arme des zweiten Wagens zu beabstanden.

## Claims

1. Assembly comprising a first and a second identical, wheeled supermarket trolley engageable one into the other for compact storage and exhibiting a front (1a), a rear (1b) and a central longitudinal axis (1c) intersecting them, the first trolley being provided with a tubular reinforcement (5), a lower portion whereof forms a substantially horizontal frame (25):
- which receives the wheels and
- from the rear of side edges whereof uprights are fixedly raised, between and to the rear whereof an operating handle (37) of the trolley extends, said assembly being **characterized in that** some of the uprights:
- are joined transversely to the longitudinal axis (1c) to define at least one arch (155a, 155b),
- have at least one arm which:
* extends forwards beyond said uprights horizontally or at an angle of less than +/-25° in respect of the horizontal, exhibiting a length (L) following said central longitudinal axis (1c),
* on a horizontal plane and over at least most of its length is situated closer to this central longitudinal axis (1c) than to a vertical plane passing through one or the other of said side edges of the frame (25)
* and exhibits longitudinally supports (17a, 17b...) for hanging shopping bags (50) there in a removable manner, along and on both sides of this arm and
- between them define an open transverse space (27) meaning that when there are no bags suspended the arm(s) of the second trolley (100) can engage there below the operating handle, while the lower frame receives that of this second trolley.

2. Assembly according to Claim 1, **characterized in that** each trolley comprises, just above said frame (25) of the tubular reinforcement, a lower loading platform which:
- is mounted pivotably on the frame following an axis perpendicular to said longitudinal direction (1c) by two rear pivots (23a, 23b) situated towards the rear side edges of the platform,
- and/or exhibits two levels, a rear (110b) and a front (110a) level, respectively, the latter being raised in respect of the rear level.

3. Assembly according to Claim 1 or 2, **characterized in that** said bag supports on the first trolley comprise supports (17a, 17b...) for suspending bags in an overhanging manner by hooking, which supports are disposed spaced apart from the area in which the arm(s) of the second trolley (100) engage(s).

4. Assembly according to at least one of Claims 1 to 3, **characterized in that** the first trolley comprises two aforementioned arms (159a1, 159b1) exhibiting said supports (17a, 17b...) of the bags longitudinally and, between them to the rear, an opening (150) which communicates with said transverse space (27) to allow the arms of the second trolley (100) to engage between those of the first (1), these arms (159a1, 159b1) moving closer together forwardly.

5. Assembly according to Claim 4, **characterized in that** at the front the two arms are joined to one another such that they form the outline of a kind of pin splaying rearwards.

6. Assembly according to one of the preceding claims, **characterized in that** the arm(s) (159a1, 159b1) is/are held solely at the rear by the uprights (15a, 15b), such that they extend forwards therefrom in an overhanging manner.

7. Assembly according to at least one of the preceding claims, **characterized in that** the arm(s) (159a1, 159b1) is/are rigidly attached to said arch (155a, 155b) or to at least one of them, to transfer the load.

8. Assembly according to one of the preceding claims, **characterized in that** each trolley comprises a structure (33) of a synthetic material exhibiting two side walls (33a, 33b) rising about uprights (155a, 155b) to above the level where the arm(s) (159a1, 159b1) extend(s), said side walls which delimit said uprights to the front and rear to cover them, at least outwardly, being joined transversely to the longitudinal axis (1c) to define an open transverse arch (39) rising substantially to the level of the handle above the level of the arm(s) (159a1, 159b1), such that the arm(s) of the second trolley can engage through said arch (39) of the first trolley.

9. Assembly according to Claim 8, **characterized in that** above the level of the arm(s) (159a, 159b, 159a1, 159b1), the rising arch (39) curves rearwards to move back the operating handle (37) of the trolley (1, 100).

10. Assembly according to Claim 4 or according to this Claim 4 and any one of Claims 5 to 9, **characterized in that** the arms of the first trolley have at least one stop (161) which is:
- situated spaced apart from the point at which the second trolley (100) engages with the first,
- and against which they carry bags (50, 50b) suspended back to back in such a manner as to limit their freedom to swing transversely to said longitudinal axis (1c).

11. Assembly according to Claim 4 or this Claim 4 and one of Claims 5 to 9, **characterized in that** the arms of the first trolley appear like two sections (159a, 159b) converging towards the front, having two bends (159c, 159d) at a same point in their respective lengths which thereby widen rearwards proximate to said uprights the space between the sections where:
- either the arms of the second trolley
- or an aforementioned bag suspended from additional supports (17c) fixed to the reinforcement (5) can engage.

12. Assembly according to Claims 4 and 10, **characterized in that** an aforementioned stop (161) is situated below the level of each arm (159) and fixed thereto, these two stops moving closer together forwards to allow said engagement of one trolley in the other and each belonging to a load recovery element creating a prop for the arm.

13. Assembly according to one of the preceding claims, **characterized in that** the (each) arm (159) which exhibits along its extension direction and in its immediate environment a free passage where the arm(s) of said second trolley can pass is provided with advertising supports (190):
- either situated spaced apart from said free passage reserved for the arm(s) of said second trolley,
- or which impinge on this free passage, mobile advertising means (200) allowing their removal from the passage of the arm(s) of the second trolley.
